(19) Europäisches Patentamt
European Patent Office
Office européen des brevets

(11) Publication number : 0 458 968 B1

(12) **EUROPEAN PATENT SPECIFICATION**

(45) Date of publication of patent specification : **13.12.95 Bulletin 95/50**

(51) Int. Cl.[6] : **G11B 7/24**

(21) Application number : **90915187.0**

(22) Date of filing : **19.10.90**

(86) International application number : **PCT/JP90/01352**

(87) International publication number : **WO 91/06098 02.05.91 Gazette 91/10**

# (54) SEALED-TYPE OPTICAL CARD

(30) Priority : **20.10.89 JP 271516/89**

(43) Date of publication of application : **04.12.91 Bulletin 91/49**

(45) Publication of the grant of the patent : **13.12.95 Bulletin 95/50**

(84) Designated Contracting States : **AT BE CH DE FR GB IT LI NL SE**

(56) References cited :
**EP-A- 0 023 809**
**EP-A- 0 272 875**
**JP-A- 5 489 605**
**JP-A- 6 010 431**
**JP-A-61 115 186**
**JP-A-61 220 148**
**JP-A-63 271 741**

(73) Proprietor : **Kyodo Printing Co., Ltd.**
**14-12, Koishikawa 4-chome**
**Bunkyo-ku**
**Tokyo 112 (JP)**

(72) Inventor : **FUJITA, Minoru**
**Kyodo Printing Co., Ltd.**
**14-12, Koishikawa 4-chome**
**Bunkyo-ku Tokyo 112 (JP)**
Inventor : **KAKINUMA, Yuji**
**Kyodo Printing Co., Ltd.**
**14-12, Koishikawa 4-chome**
**Bunkyo-ku Tokyo 112 (JP)**
Inventor : **FUKUSHIMA, Yoichi**
**Kyodo Printing Co., Ltd.**
**14-12, Koishikawa 4-chome**
**Bunkyo-ku Tokyo 112 (JP)**

(74) Representative : **Spoor, Brian et al**
**c/o E.N. LEWIS & TAYLOR**
**144 New Walk**
**Leicester, LE1 7JA (GB)**

EP 0 458 968 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### TECHNICAL FIELD

This invention relates to an optical card, that is, an optical recording card in which information is optically written to an optical recording section in or on the card, and the written information is optically read out and, more particularly, to an optical card of closed type in which an optical recording section, onto which information is recorded, is isolated from the outside environment.

### BACKGROUND ART

Generally, an optical card has extremely high information recording density as compared with other recording cards such as a magnetic card, an IC card and so on. The optical card has an optical recording section on one side of a substrate. Information is recorded onto the optical recording section by an optical energy, chiefly, a laser light. On the basis of a difference in optical reflectivity between a recorded portion and a portion on which recording is not made, the recorded information is optically reading back.

The general background of the optical card constructed as described above is disclosed in US-A-4,680,460 or US-A-4,673,626, for example. As will be seen from these patents, the optical card is broadly divided into two categories. One of them is an read only optical card in which a user performs only reading-out, that is, an optical card of ROM (Read Only Memory) type. The other is an additional recording optical card in which the user performs also writing, that is, an optical card of WO (Write Once) type.

A first characteristic required for a recording material in the optical card of WO type is a writing characteristic. In view of this, a recording material of boring type is preferable whose representative is a low-melting-point metal such as tellurium, bismuth or the like or its alloy. Conversely, however, the more the writing characteristic is superior, the more the recording material tends to be subjected to an influence due to the outside environment, so that there is such a tendency that a difficult point occurs in other characteristics such as durability and so on.

As a method of improving the environmental resistance, there is known means for isolating the optical recording section made of boring-type recording material, from the outside environment. For example, as one of optical discs, there already exists an optical disc in which an optical recording section is enclosed between a pair of substrates of the optical disc while providing an air gap. Here, the air gap is provided for escaping the recording material melted due to heat, to the air gap, in order to prevent the writing characteristic from being deteriorated.

There is also seen a technique in which the closing method having such air gap is applied to an optical card (Japanese Patent Provisional Publication JP-A-61-96539). It cannot be said, however, that the technique is suitable in a wide usability such as carrying or the like of the optical card, because there is a fear that the air gap causes such another problem as to reduce characteristics such as compactness and strength as the card.

JP-A-61.220.148 which reflects the subject matter of the preamble of claim 1 and JP-A-61.115.186 both disclose an optical card comprising a sensitizing layer provided between the substrate and the recording layer.

### DISCLOSURE OF THE INVENTION

It is an object of this invention to provide a new or novel technique of an optical card in which, in spite of the fact that the card is of a closed construction superior in environmental resistance, the optical card is superior also in a writing characteristic and card characteristics.

This invention is widely applicable to various kinds of optical cards of WO type of a construction in which an optical recording section is closed. As a method of closing the optical recording section, there are a method covering the optical recording section on one side of a light-transmittance substrate by a protective layer as a whole, a method of closing the optical recording section between a pair of card substrates in a sandwich fashion, a method in which a substrate supporting the optical recording section is made of a flexible sheet, and the optical recording section on the sheet is closed between a pair of reinforcing substrates together with the sheet in a sandwich fashion, or the like.

This invention is applicable also to an optical card taking any one of the aforementioned closed methods. In either case, a sensitizing layer made of a self-oxidizable or thermoplastic resin is laminated onto the optical recording section made of a boring-type recording material directly adjacent the same. It is of course that the self-oxidizable resin indicates a resin lower in decomposition (oxidizing) point than the melting point. The sensitising layer is located in rear of the optical recording section, when viewed from one side of the substrate upon which a recording light is incident. This specific positional relationship is important in practicing formation of pits due to writing superiorly in reproducibility or repeatability and, further, is important also in producing high contrast at reading.

The sensitizing layer functions such that, when information is written to the optical recording section, a recording material solved due to energy of the recording light escapes into a layer of the recording material. For this reason, an attempt can be made to improve the writing characteristic. This improvement in the writing characteristic is particularly noticeable or remarkable when an absorbing agent effectively absorbing optical energy of the recording light is contained in the sensitizing layer and, slightly more specifically, when green to blue dyes or black dyes in complementary-color relation to a laser light in a near-infrared range is contained in the sensitizing agent.

Here, description will be made along experimental examples, regarding improvement in the writing characteristic. In this connection, a laser light, which is used in each of experiments, is an infrared laser light whose wavelength is 830 nm and whose spot size is 6.5 μm.

Table 1: Affection or Influence due to Absence of Sensitizing Layer

| Sensitizing Layer | Sensitizing Layer Membrane Thickness (μm) | Te Membrane Thickness (Å) | Mean Pit Diameter (μm) | Contrast (±3σ) |
|---|---|---|---|---|
| None | - | 360 | 3.5 | 0.49 (±0.05) |
| Nitro-cellulose (HIG 1/8, Asahi Chemical Industry Co., Ltd.) | 2 | 370 | 2.3 | 0.41 (±0.01) |
| Polyvinyl Chloride-acetate Copolymer resin (Vinylite-resin, Union Carbide Corp.) | 2 | 360 | 2.5 | 0.48 (±0.01) |
| Poly-vinyl butyral (S-LEC B, Sekisui Chemical Co., Ltd.) | 2 | 360 | 2.5 | 0.47 (±0.01) |
| Poly-methyl metha-crylate | 3 | 370 | 2.4 | 0.45 (±0.02) |
| Polyvinyli-dene chloride (SARAN 202, Asahi Chemical Industry Co., Ltd.) | 2 | 362 | 3.0 | 0.47 |

As will be seen from the table 1, in the case where there is no sensitizing layer, variation in contrast ratio (ten (10) point measurement) is large, whereas, by provision of the sensitizing layer, the variation can be reduced. Effects due to the reduction of the variation can be seen in the self-oxidizable resin such as nitrocellulose, and also in the thermoplastic resin.

Table 2: Affection or Influence When Dyes are contained in Sensitizing Layer

| Sensitizing Layer + Dyes | Sensitizing Layer Membrane Thickness (μm) | Te Membrane Thickness (Å) | Mean Pit Diameter (μm) | Contrast (±3σ) |
|---|---|---|---|---|
| Nitro-cellulose + Near-Infrared Absorbing Dyes (IR-820, Nippon Kayaku Co., Ltd.) (HIG 1/8: IR-820 = 14:1 | 2 | 310 | 3.9 | 0.59 (±0.02) |
| HIG 1/8: IR-820 = 10:1 | 1 | 360 | 4.1 | 0.62 (±0.02) |
| HIG 1/8: IR-820 = 6.7:1 | 2 | 366 | 4.2 | 0.59 |
| SARAN 202: IR-820 = 10:1 | 2 | 361 | 4.6 | 0.68 |

As will be seen from comparison of the results of the table 2 with those of the aforesaid table 1, addition of the near-infrared absorbing dyes to the sensitizing layer enables the writing sensitivity to be improved (pits to be enlarged), and enables the contrast ratio to be further raised. The more an amount of addition of the dyes, the more preferable, in order to raise the contrast ratio. It is sufficient, however, if there is of the order of 5% by weight ratio.

As described above, the sensitizing layer located adjacent the optical recording section has such a function as to improve the writing characteristic with respect to the optical recording section, and can effectively make the most of the function of the environmental resistance due to closure which the optical card of closed type has.

BRIEF DESCRIPTION OF THE DRAWINGS

Fig. 1 is a perspective view showing a first embodiment of a hermetic-type or closed-type optical card according to this invention;

Fig. 2 is a view showing a cross-sectional construction of the optical card illustrated in Fig. 1;

Fig. 3 is a cross-sectional view showing a second embodiment of the optical card according to the invention;

Fig. 4 is a cross-sectional view showing a third embodiment of the optical card according to the invention; and

Fig. 5 is a cross-sectional view showing a fourth embodiment of the optical card according to the invention.

BEST MODE FOR CARRYING OUT THE INVENTION

First Embodiment...Figs. 1 and 2

An optical card 10 is of such a construction that an optical recording section 30 having a pre-format pattern is put between a transparent card substrate 12 on the front-surface side and an opaque card substrate 14 on the rear-surface side in a sandwich fashion, and is closed.

It is required that a laser light for writing and reading is sufficiently transmitted through at least one of the pair of card substrates 12 and 14. The card substrate 12 on the front-surface side is made of polycarbonate sheet having light transmittance and having its thickness of 0.4 mm. The substrate 12 has two sides 12a and 12b which extend in parallel relation to each other. A hard coat layer 16, whose thickness is about 5 μm, is formed on the first side 12a which is one of the two sides 12a and 12b. The side of the first side 12a having the hard coat layer 16 is the side upon which the laser light L is incident for writing and reading. The hard coat layer 16 protects the surface of the first side 12a of the card substrate 12. On the other hand, an anchor layer 18, whose thickness is of the order of 0.5 μm, is formed on the other second side 12b of the card substrate 12. The optical recording section 30 is formed on the anchor layer 18. The anchor layer 18 is provided for improving adhesiveness between the card substrate 12 and the optical recording section 30, and is made of a silicon acrylic resin layer, for example. Further, the optical recording section 30 is made of Te whose thickness is of the order of 350 Å. A predetermined format pattern is beforehand formed on the optical recording section 30 per se by photoetching.

On the other hand, the card substrate 14 on the rear side is made of a hard vinyl chloride sheet whose color is white and whose thickness is 0.35 mm. The card substrate 14 has also two sides 14a and 14b which extend in parallel relation to each other. Printing such as silk-screen printing, UV-offset printing or the like is applied to one of the two sides 14a, while an urethane adhesive layer 40 of normal-temperature hardened type, whose thickness is about 20 μm, is formed on the other side 14b as a whole. The thus formed card substrate 14 on the rear side is stuck to the card substrate 12 on the front side with the adhesive layer 40. Forming of the adhesive layer 40 by adhesives of normal-temperature hardened type enables the card substrates 12 and 14 on the front and rear sides to be stuck together without the use of heat press. For this reason, the card substrates 12 and 14 on the front and rear sides are not subject to influence of heat shrinkage due to a difference in material between the card substrates 12 and 14. Thus, it is possible to beforehand avoid such a problem that the card is curled.

The optical recording section 30 is formed on the second side 12b of the card substrate 12 on the front side, to which the card substrate 14 on the rear side is stuck. A sensitizing layer 50 is covered on the optical recording section 30. As a material of the sensitizing layer 50, it is possible to use various thermoplastic resins and self-oxidizable resins. In this example, however, polyvinylidene chloride paint containing near-infrared absorbing dyes was used. Silk-screen printing was employed in formation of the sensitizing layer 50, and its thickness was about 2 μm. In this case, the sensitizing layer 50 has its area broader than the optical recording section 30. However, the sensitizing layer 50 is narrower than the optical recording section 30 in dimension as a card. For this reason, when both the card substrates 12 and 14 on the front and rear sides are stuck together, the optical recording section 30 is protected double by both the sensitizing layer 50 and the adhesive layer 40. By such double protecting, the optical recording section 30 is effectively isolated from the outside environment, so that anti-environment or environmental resistance is ensured to be improved. Further, in the interior of the optical card 10, not only an attempt is made for the sensitizing layer 50 to improve a writing characteristic of the optical recording section 30, but also the sensitizing layer 50 cooperates with printing characters 60 or the like which are provided on the card substrate 12 or the like, to raise design effects or advantages of the optical card 10 per se.

In practice, the results of experiments conducted on the optical card 10 regarding the writing characteristic and the durability indicated superior characteristics. For example, regarding the writing, when the aforesaid infrared laser light was used whose wavelength was 830 nm, it was possible to produce a sufficiently large contrast ratio by writing power of the order of 8 mW for irradiation time of 150 μsec and of the order of 11 mW for irradiation time of 50 μsec. Further, at immersion test of medicine resistance known in the field of magnetic cards, that is, when the card was immersed, for forty-eight (48) hours at the room temperature, in each of liquids such as a 5% saline solution, a 5% acetic solution, a 1% sodium hydroxide solution and a 1% sodium carbonate decahydrate solution, an error rate did not change from the beginning of the immersion to completion of the immersion, and was of the order of $10^{-5}$.

Second Embodiment...Fig. 3

An optical card 200 according to this second embodiment utilizes a protective layer 210 due to coating, in place of the card substrate 14 on the rear side and the adhesive layer 40 in the optical card 10 according to the first embodiment. As the protective layer 210, a material is used which can uniformly cover the surface of the sensitizing layer 50 as a whole to isolate the outside humidity and the like, for example, a general resin is employed such as UV hardening type, acrylic type or the like. A commercially available resin can be used as the resin of UV hardening type as it is. Also for the resin of acrylic type, the viscosity can be regulated or adjusted for coating by the use of a solvent (alcohol, toluene or the like) which does not exert a bad influence to the sensitizing layer 50. In the case of the optical card 200, since an adhesive step between the substrates can be omitted or dispensed with, manufacturing is more easy.

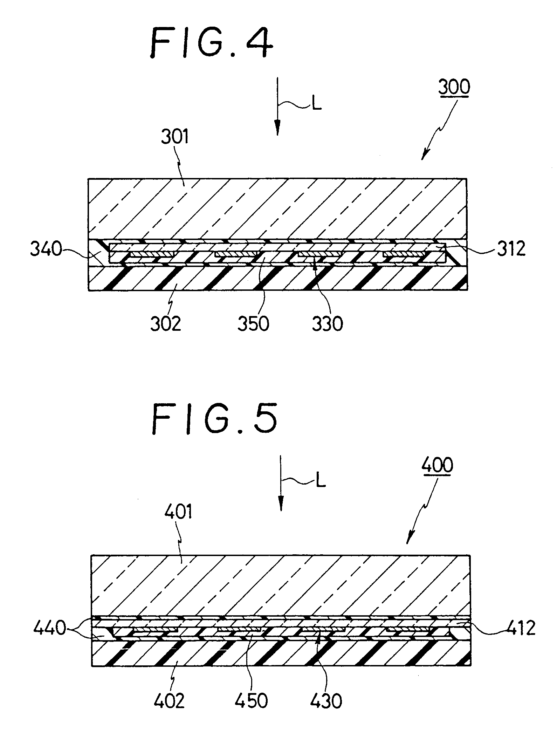

Third Embodiment...Fig. 4

For an optical card 300 according to the third embodiment, the substrate 12 in the optical card 10 according to the first embodiment is formed by a flexible sheet 312 and, after an optical recording section 330 and a sensitizing layer 350 have been formed on the sheet 312, the sheet 312 including the optical recording section 330 and the sensitizing layer 350 is put between a light-transmittance first reinforcing substrate 301 and an opaque second reinforcing substrate 302 in a sandwich fashion. For the optical card 300, the sheet 312 is formed slightly smaller in dimension than the first and second reinforcing substrates 301 and 302, whereby it is possible to fill up also gap portions occurring on the lateral sides of the card, by an adhesive layer 340. Accordingly, it is possible to close the optical recording section 330 in the interior of the card with sufficient environmental resistance. Further, for the optical card 300, since the sheet 312 is flexible, it is possible to form the optical recording section 330 and the sensitizing layer 350 by rolling the sheet 312. Furthermore, since the sheet 312 forming the optical recording section 330 and the sensitizing layer 350 can be treated or handled as a semi-product, it is easy to apply known processing such as printing or the like to the first and second reinforcing substrates 301 and 302.

Fourth Embodiment...Fig. 5

An optical card 400 according to the fourth embodiment is a so-called modification of the third embodiment. Here, a sheet 412, which supports an optical recording section 430 and a sensitizing layer 450, has a dimension which is the same as those of first and second reinforcing substrates 401 and 402. It is possible, however, to close double the lateral sides of the optical recording section 430 by the sensitizing layer 450 and a pair of adhesive layers 440.

In connection with the above, the material and the technical specification of the first and second reinforcing substrates 301 and 401; and 302 and 402 in the third and fourth embodiments are the same as those of the light-transmittance substrate 12 and the card substrate 14 in the first embodiment.

INDUSTRIAL APPLICABILITY

As described above, it is possible for the invention to still produce the superior writing characteristic even if the optical card of WO type, whose recording material is tellurium easy in writing, its alloy or the like, is of a closed construction high in environmental resistance. Thus, the optical card is extremely high in practicability as an optical card superior in both sides of the writing characteristic and the environmental resistance, and is useful in diffusion of the optical card.

## Claims

1. An enclosed type optical card comprising a parallel sided light transmitting substrate (12, 312, 412) having first (12a) and second (12b) sides, the first side (12a) being a writing side upon which in use, a writing light (L) is incident, an optical recording section (30, 330, 430) located on the second side (12b) of the substrate, the optical recording section (30, 330, 430) being operative by cavities formed by optical energy of the writing light (L), the optical recording sections (30, 330, 430) including a thin membrane layer made of a light reflective recording material, a sensitizing layer (50, 350, 450) directly laminated on the optical recording section characterised in that the sensitizing layer (50, 350, 450) is made of a self-oxidizable or thermoplastic resin containing an absorbing agent dispersed in the resin for absorbing writing light (L), the sensitizing layer providing an escape for molten recording material when cavities are formed in the thin membrane layer, and closing means (40, 340, 440) including a coating layer coating the sensitizing layer (50, 350, 450).

2. An optical card according to claim 1 characterised in that the first side (12a) of the substrate (12, 312, 412) is both a writing and a reading side upon which a reading light (L) is incident.

3. An optical card according to claim 1 or 2 characterised in that the absorbing agent is a near-infrared absorbing agent.

4. An optical card according to claim 1, 2 or 3 characterised in that the closing means consists of only a protective layer (210) which serves as a coating layer coating the sensitizing layer (50, 350, 450).

5. An optical card according to claim 1, characterised in that the coating layer (40) is an adhesive layer, the optical recording section being sandwiched between the adhesive layer and a second card substrate (14).

6. An optical card according to claim 5 characterised in that the light-transmitting substrate (12), the card substrate (14), the optical recording section (30) and the sensitizing layer (50) each define an area, the areas defined by the optical recording section (30) and the sensitizing layer (50) being less than those areas defined by the two substrates (12, 14).

7. An optical card according to claim 6, characterised in that the adhesive layer (40) coats the sensitizing layer as a whole and fills up a gap between the light-transmitting substrate (12) and the second card substrate (14) at a peripheral edge portion of the sensitizing layer.

8. An optical card according to claim 1 characterised in that the light-transmitting substrate is made from a flexible sheet (312, 412), a light-transmitting reinforcing substrate (301, 401) being attached to the first side of the sheet through an adhesive layer, the second card reinforcing substrate (302, 402) being attached onto the sensitizing layer on the second side of the sheet by an adhesive layer.

9. An optical card according to claim 8 characterised in that the flexible sheet (312) is smaller in dimension than the light-transmitting substrate and the second card substrate.

10. An optical card according to claim 1 to 9 characterised in that the recording material is made from a low-melting point metal or its alloy.

11. An optical card according to claim 11 characterised in that the recording material is made from tellurium or its alloy.

## Patentansprüche

1. Gekapselte optische Karte, mit einem parallele Seiten aufweisenden, lichtübertragenden Substrat (12, 312, 412), das eine erste (12a) und eine zweite (12b) Seite aufweist, wobei die erste Seite (12a) eine Schreibseite darstellt, auf die im Gebrauch Schreiblicht (L) fällt, und auf der zweiten Seite (12b) des Substrats ein optischer Aufnahmeabschnitt (30, 330, 430) angeordnet ist, der durch Hohlräume, die durch optische Energie des Schreiblichtes (L) gebildet sind betriebsfähig ist, wobei die optischen Aufnahmeabschnitte (30, 330, 430) eine dünne Membranschicht aus lichtreflektierendem Aufnahmematerial aufweisen, und mit einer sensibilisierenden Schicht (50, 350, 450), die auf den optischen Aufnahmeabschnitt unmittelbar laminiert ist, **dadurch gekennzeichnet,** daß die sensibilisierende Schicht (50, 350, 450) aus einem selbst oxidierbaren oder thermoplastischen Kunststoff gebildet ist, der ein Absorptionsmittel, das in dem Kunststoff zum Absorbieren des Schreiblichtes (L) dispergiert ist, enthält, daß die sensibilisierende Schicht eine Undichtheit für geschmolzenes Aufnahmematerial dann, wenn Hohlräume in der dünnen Membranschicht gebildet sind, vorsieht und daß Verschlußmittel (40, 340, 440) eine Überzugsschicht, die die sensibilisierende Schicht (50, 350, 450) überzieht, aufweisen.

2. Optische Karte nach Anspruch 1, dadurch gekennzeichnet, daß die erste Seite (12a) des Substrats (12, 312, 412) sowohl eine Schreib- als auch eine Leseseite ist, auf die ein Schreiblicht (L) fällt.

3. Optische Karte nach Anspruch 1 oder 2, dadurch gekennzeichnet, daß das absorbierende Mittel ein mittleres Infrarot absorbierendes Mittel ist.

4. Optische Karte nach Anspruch 1, 2 oder 3, dadurch gekennzeichnet, daß das Verschlußmittel aus lediglich einer Schutzschicht (210) besteht, die als eine Überzugsschicht, die die sensiblisierende Schicht (50, 350, 450) überzieht, dient.

5. Optische Karte nach Anspruch 1, dadurch gekennzeichnet, daß die Überzugsschicht (40) eine Adhäsionsschicht ist und daß der optische Aufnahmeabschnitt zwischen der Adhäsionsschicht und einem zweiten Kartensubstrat (14) geschichtet ist.

6. Optische Karte nach Anspruch 5, dadurch gekennzeichnet, daß das lichtübertragende Substrat (12), das Kartensubstrat (14), der optische Aufnahmeabschnitt (30) und die sensibilisierende Schicht (50) jeweils einen Bereich definieren und daß die von dem optischen Aufnahmeabschnitt (30) und der sensibilisierenden Schicht (50) definierten Bereiche kleiner sind als diejenigen Bereiche, die von den beiden Substraten (12, 14) definiert sind.

7. Optische Karte nach Anspruch 6, dadurch gekennzeichnet, daß die Adhäsionsschicht (40) die sensibilisierende Schicht als Ganzes überzieht und einen Spalt zwischen dem lichtübertragenden Substrat (12) und dem zweiten Kartensubstrat (14) an einem Umfangskantenbereich der sensibilisierenden Schicht ausfüllt.

8. Optische Karte nach Anspruch 1, dadurch gekennzeichnet, daß das lichtübertragende Substrat aus einer flexiblen dünnen Platte (312, 412) hergestellt ist, daß ein lichtübertragendes versteifendes Substrat (301, 401) an der ersten Seite der dünnen Platte durch eine Adhäsionsschicht befestigt ist und daß das die zweite Karte verstärkende Substrat (302, 402) auf der sensibilisierenden Schicht an der zweiten Seite der dünnen Platte durch eine Adhäsionsschicht befestigt ist.

9. Optische Karte nach Anspruch 8, dadurch gekennzeichnet, daß die flexible dünne Platte (312) in den Abmessungen kleiner ist als das lichtübertragende Substrat und das zweite Kartensubstrat.

10. Optische Karte nach einem der Ansprüche 1 bis 9, dadurch gekennzeichnet, daß das Aufnahmematerial aus einem Metall mit niedrigem Schmelzpunkt oder dessen Legierung ist.

11. Optische Karte nach Anspruch 10, dadurch gekennzeichnet, daß das Aufnahmematerial aus Tellur oder dessen Legierung hergestellt ist.

## Revendications

1. Carte optique du type encastré comprenant un substrat émetteur de lumière à côtés parallèles (12, 312, 412) comportant des premier (12a) et second (12b) côtés, le premier côté (12a) étant un côté écriture sur lequel dans l'utilisation, une lumière d'écriture (L) vient en incidence, une section d'enregistrement optique (30, 330, 430) située sur l'autre côté (12b) du substrat, la section d'enregistrement optique (30, 330, 430) étant opérante par des cavités formées par l'énergie optique de la lumière d'écriture (L), les sections d'enregistrement optiques (30, 330, 430) comprenant une couche de membrane mince réalisée à partir d'un matériau d'enregistrement réfléchissant la lumière, une couche de sensibilisation (50, 350, 450) directement stratifiée sur la section d'enregistrement optique, caractérisée en ce que la couche de sensibilisation (50, 350, 450) est réalisée à partir d'une résine auto-oxydable ou thermoplastique contenant un agent absorbant dispersé dans la résine pour absorber la lumière d'écriture (L), la couche de sensibilisation assurant une évacuation pour le matériau d'enregistrement en fusion lorsque des cavités sont formées dans la couche de membrane mince et des moyens de fermeture (40, 340, 440) comprenant une couche de revêtement recouvrant la couche de sensibilisation (50, 350, 450).

2. Carte optique selon la revendication 1, caractérisée en ce que le premier côté (12a) du substrat (12, 312, 412) est à la fois un côté d'écriture et un côté de lecture sur lequel vient en incidence la lumière de lecture (L).

3. Carte optique selon la revendication 1 ou 2, caractérisée en ce que l'agent absorbant est un agent d'absorption proche des infrarouges.

4. Carte optique selon la revendication 1, 2 ou 3, caractérisée en ce que les moyens de fermeture consistent en seulement une couche de protection (210) qui sert de couche de revêtement recouvrant la couche de sensibilisation (50, 350, 450).

5. Carte optique selon la revendication 1, caractérisée en ce que la couche de revêtement (40) est une couche adhésive, la section d'enregistrement optique étant prise en sandwich entre la couche adhésive et un second substrat de carte (14).

6. Carte optique selon la revendication 5, caractérisée en ce que le substrat émetteur de lumière (12), le substrat de carte (14), la section d'enregistrement optique (30) et la couche de sensibilisation (50) définissent chacun une zone, les zones définies par la section d'enregistrement optique (30) et la couche de sensibilisation (50) étant inférieures aux zones définies par les deux substrats (12, 14).

7. Carte optique selon la revendication 6, caractérisée en ce que la couche adhésive (40) recouvre la couche de sensibilisation dans son ensemble et remplit un espace vide entre le substrat émetteur de lumière (12) et le second substrat de carte (14) sur la portion de bord périphérique de la couche de sensibilisation.

8. Carte optique selon la revendication 1, caractérisée en ce que le substrat émetteur de lumière est réalisé à partir d'une feuille souple (312, 412), un substrat de renforcement émetteur de lumière (301, 401) étant fixé sur le premier côté de la feuille par une couche adhésive, le second substrat de renforcement de carte (302, 402) étant fixé sur la couche de sensibilisation sur le second côté de la feuille par une couche adhésive.

9. Carte optique selon la revendication 8, caractérisée en ce que la feuille souple (312) est de dimension plus petite que le substrat émetteur de lumière et le second substrat de carte.

10. Carte optique selon les revendications 1 à 9, caractérisée en ce que le matériau d'enregistrement est réalisé à partir d'un métal à faible point de fusion ou son alliage.

11. Carte optique selon les revendications 1 à 9, caractérisée en ce que le matériau d'enregistrement est réalisé à partir de tellurium ou de son alliage.

FIG. 1

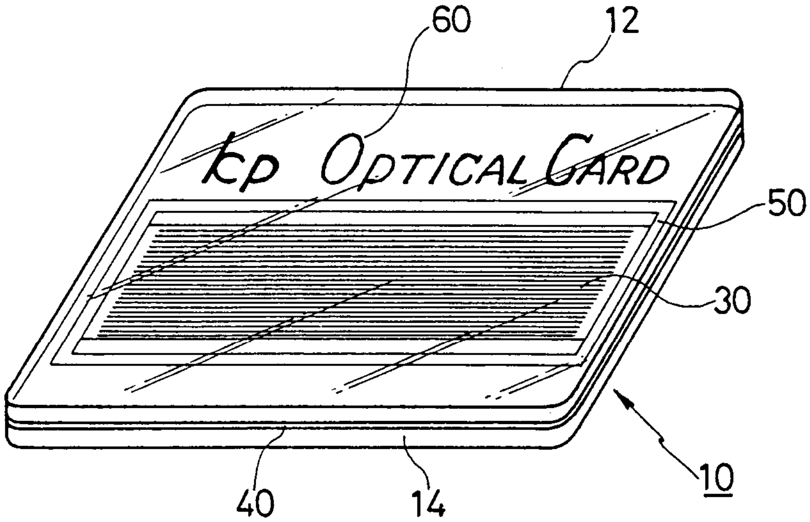


FIG. 2

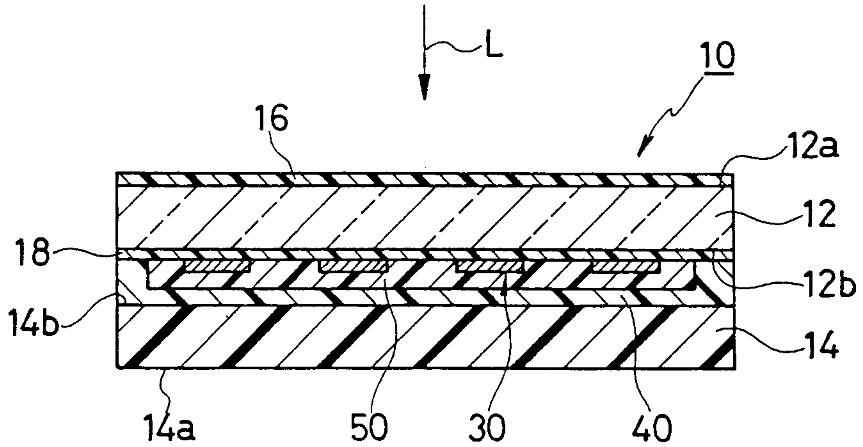


FIG. 3

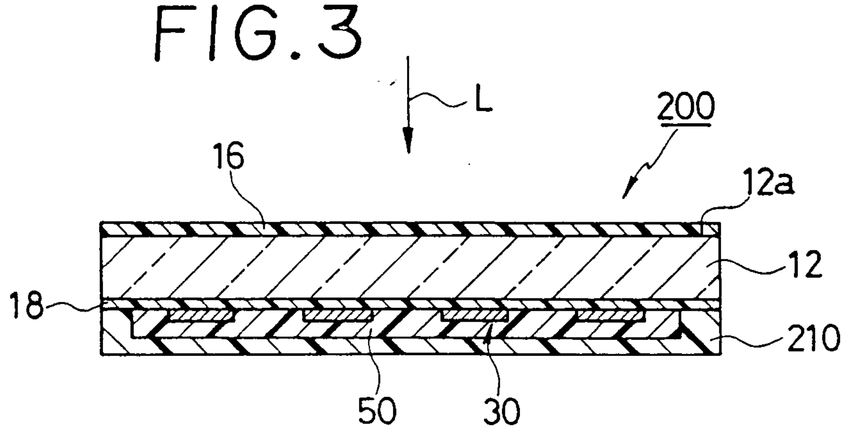

FIG. 4

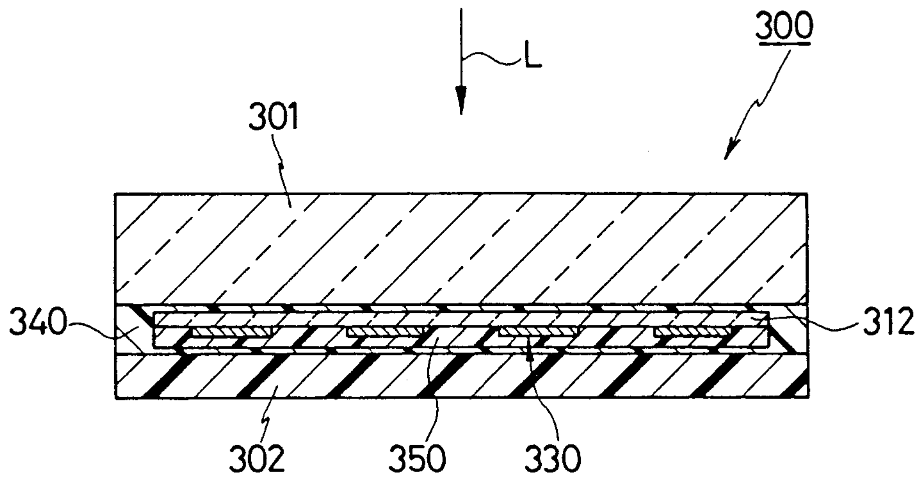


FIG. 5